# EUROPEAN PATENT SPECIFICATION

(11) **EP 1 907 216 B1**
(45) Date of publication and mention of the grant of the patent: **21.03.2012**
(21) Application number: 06766166.0
(22) Date of filing: 23.07.2006
(51) Int. Cl.: B41J 3/00

(54) **A METHOD FOR APPLYING DESIGNS ON THE SURFACE OF A BEVERAGE**
VERFAHREN ZUM AUFBRINGEN VON DESIGNS AUF DIE OBERFLÄCHE EINES GETRÄNKS
PROCEDE D'APPLICATION DE MOTIFS A LA SURFACE D'UNE BOISSON

(30) Priority: 25.07.2005 IL 16985205
(43) Date of publication of application: 09.04.2008
(73) Proprietor: Eliav, Eyal, 65224 Tel Aviv (IL); Lavie, Danny, 47280 Ramat Hasharon (IL)
(72) Inventor: Eliav, Eyal, 65224 Tel Aviv (IL); Lavie, Danny, 47280 Ramat Hasharon (IL)
(74) Representative: Betten & Resch
(86) International application number: PCT/IL2006/000851
(87) International publication number: WO 2007/013061

(56) References cited:
- EP-A- 1 702 544
- WO-A1-2004/031103
- WO-A2-2005/118247
- GB-A- 2 399 543
- JP-A- 59 118 049
- US-A- 4 494 128
- US-A- 5 505 775
- US-A- 5 505 775
- US-A- 5 918 539
- US-A- 6 058 843
- US-A- 6 058 843
- US-A1- 2003 085 977
- US-A1- 2005 008 752
- US-A1- 2005 157 148
- US-B1- 6 207 206

## Description

### FIELD OF THE INVENTION

The present invention relates to the field of food stuff, particularly to design related aspects of coffee beverages.

### BACKGROUND OF THE INVENTION

With the rise in popularity of coffee drinking, particularly coffee drinks such as cappuccino, café latte, café au lait and other premium coffee drinks, the practice of decorating the top surface of the frothed milk has also developed. Various types of coffee beverages, including the above-mentioned beverages are served with a top layer of frothed milk over the coffee solution. The most widely practiced technique of decorating the foamed milk is known as "latte art". Latte art refers to the technique of using a coffee solution to trace a design on the surface of foamed milk, wherein usually said foamed milk is in a coffee drink such as café au lait, cappuccino, café latte or the like. The designs created in the foamed milk can be of a wide array of possibilities e.g., drawings, images and writing. There are two primary techniques for creating the designs; 1) pouring a coffee solution on to the foamed milk wherein said coffee solution is poured in a thin stream while creating the movement of the design desirous of obtaining, 2) pouring frothed(foamed)milk on the coffee solution, while moving the stream of the frothed milk to create the desirable image/drawing(apple, tree, leaf and any other possible design 3) using the tip of a utensil which is dipped in coffee to trace the design in the foamed milk. Other techniques are known by people trained in the art but are employed less frequently. All the known techniques to date are employed manually and require significant artistic skill. Accordingly, said techniques are time consuming as well. Thus, creating said designs on a commercial scale is problematic in that it requires artistically skilled personnel and the serving time of each coffee beverage.with a design on the foam is relatively long. A number of publications suggest the use of ink jet, bubble jet or other known printers for printing with food coloring onto edible substrates, e.g. U.S. patent Nos. 6,058,843, 6,536,345.

However, the prior art publications teach of the use of food colorants, which is unacceptable in the field of latte art, and are primarily aimed for use on edible substrates which are solids, gels or of high viscosity so that the food colorant (edible ink) may be fixed to the substrate. Furthermore, the prior art apparatus move the substrate during the application of the design. Hence, said prior art would not be suitable for latte art since they would move the substrate, which is the coffee beverage topped with foamed milk and in doing so would agitate the liquid and damage the design. Thus, the prior art does not teach of an automated method which can be employed for creating latte art.

Accordingly, there is a long felt need for a method for creating designs in foamed milk with a coffee solution, which does not require artistically skilled personnel and can be carried out quickly.

It is therefore an objective of the present invention to provide a method for creating designs in foamed milk with a coffee solution.

Other objectives of the invention shall become apparent as the description proceeds.

### SUMMARY OF THE INVENTION

The present invention provides a method for creating designs on the surface of foamed milk with a coffee solution comprising of dispensing a coffee solution by means of an applicator to the surface of the foamed milk in a pattern according to the intended design wherein the dispensing is controlled by automated means.

### BRIEF DESCRIPTIONS OF THE DRAWINGS

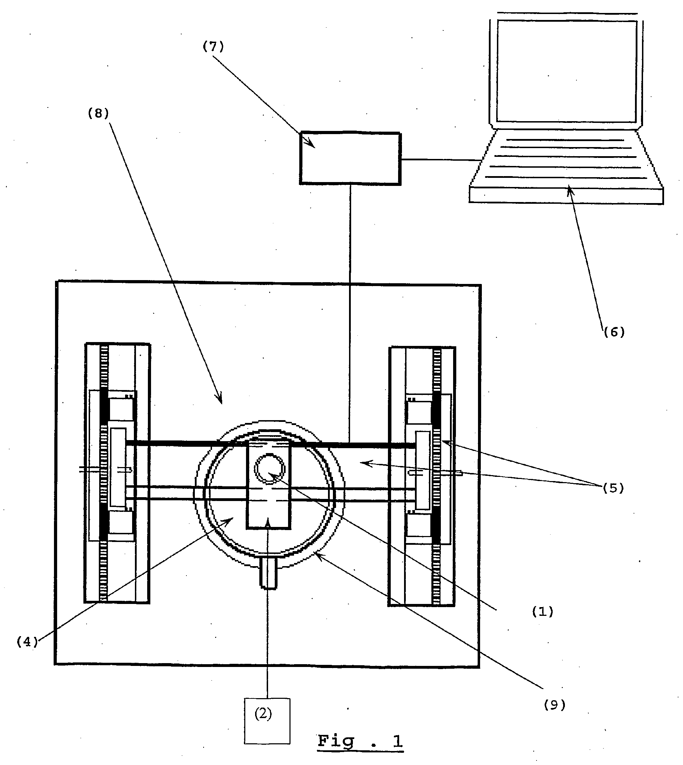

Fig. 1 - A top view of an apparatus

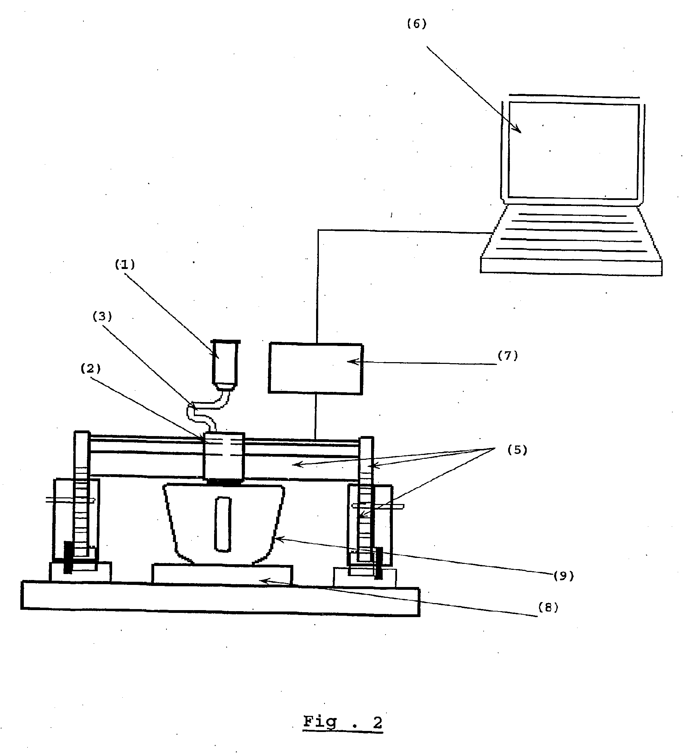

FIG. 2 A front view of an apparatus.

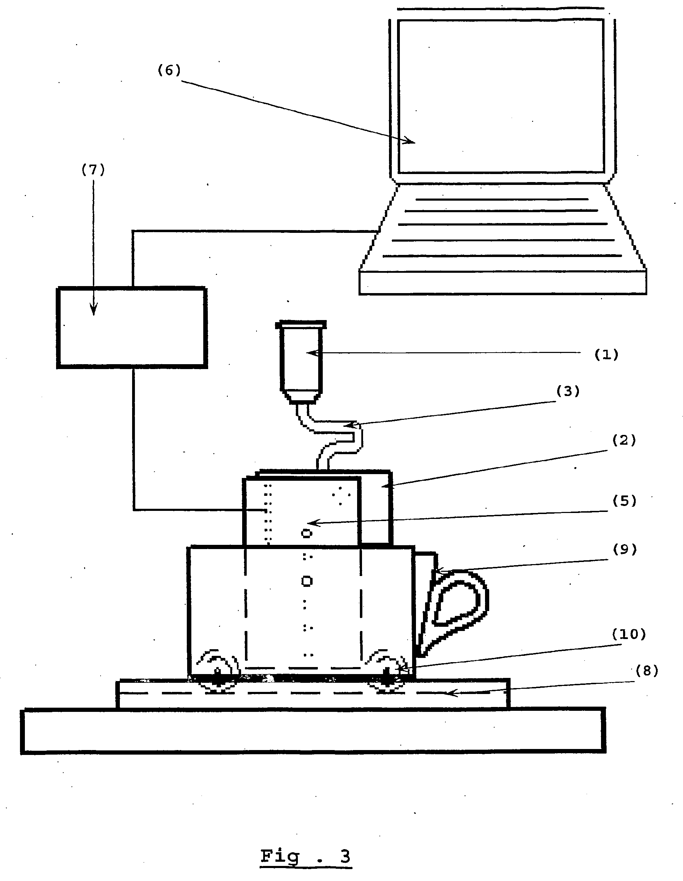

Fig. 3 - A side view of an apparatus.
Fig 4. Printed image on coffee beverage.

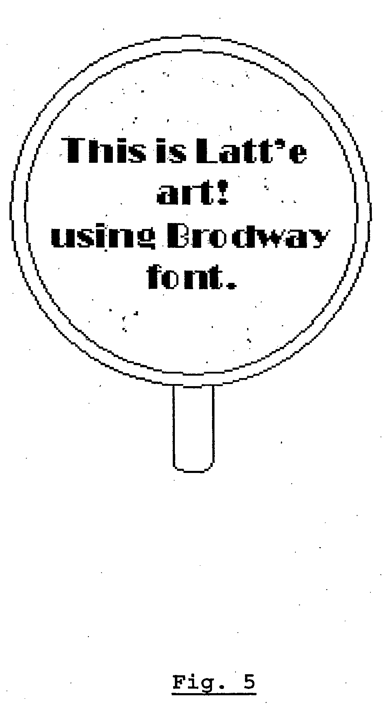

Fig 5. Printed message using "Font" on coffee beverage.

### DETAILED DESCRIPTION OF PREFERRED EMBODIMENTS

The present invention provides a novel method for creating designs in foamed milk, wherein said method may be applied on a commercial scale by automated means while obviating the need for artistically skilled personnel. The time required for creating the design in accordance with the present invention is considerably shorter than the time required for creating said design manually. Furthermore, the desired design may be reproduced almost identically as many times as required since the design is controlled by automated means. Employing said automated means makes it possible to create almost any design desired via computer image generation by means of scanning or any other computer-image-generating method. The method is particularly adopted for the surface of foamed milk.

Throughout the specification the term "coffee solution" refers to any liquid solution of coffee suitable for the purposes of the present invention. The term "foamed milk" also encompasses any dairy product which is frothed to form foam. While throughout the specification reference is made to foamed milk, said reference also encompasses embodiments wherein said foamed milk is part of a beverage, e.g. foamed milk on top of coffee, which is served in a cup. The term "design" also encompasses image, drawing, outline, letter, word, logo, sign, written message and combinations thereof.

The present invention provides a method for creating designs on the surface of foamed milk with a coffee solution comprising of dispensing a coffee solution by means of an applicator to the surface of the foamed milk in a pattern according to the intended design wherein the dispensing is controlled by automated means. The applicator may be of various types and is assembled in such a matter to perform the dispensing of coffee solution to the surface of the foamed milk. Non-limiting examples of applicators are; inkjet and bubble jet printing heads, a pointed needle-like utensil which may be hollow similar to a medical syringe needle, air brush applicators or the like, or any type of applicator which can spray, atomize, drip or apply the coffee solution onto the foamed milk. Preferably, the applicator works according to spraying or atomizing techniques.

The automated means is a combination of mechanical and data controlling devices. The mechanical devices in the automated means control the position of the applicator in relation to the surface of the foamed milk. Data controlling devices within the automated means are intended for the input, processing and output of data required for creating the design. The data may include design data for generating the desired image and commands for controlling and moving the mechanical devices.

Further is described an apparatus for creating designs on the surface of foamed milk with a coffee solution comprising; a) a reservoir; b) an applicator; c) an applicator mechanism d) a tray; e) a data controlling device, and f) a controller.

In accordance with a particular embodiment with reference to the figures, the reservoir (1) is intended for containing a coffee solution, which is applied to the surface of the foamed milk. Said reservoir (1) is connected to the applicator (2) which receives the coffee solution from the reservoir (1), optionally via a conduit (3) and dispenses said coffee solution to the surface of the foamed milk (4). Said applicator (2) may be of various types, depending on the automated means employed. Non-limiting examples of applicators are; inkjet and bubble jet printing heads which in some instances combine the reservoir and applicator, and pointed needle-like utensil which may be hollow similar to a medical syringe needle, air brush applicators or the like, or any type of applicator which can spray, atomize, drip or apply the coffee solution onto the foamed milk. Preferably, the applicator works according to spraying or atomizing techniques.. The applicator is moved by the applicator mechanism **(5)** which is designed to provide the ability of moving the applicator along any of the three dimensional axis (X, Y and Z) in any required combination of motion. According to a particular embodiment, electronic motors (10) which receive commands from the controller move the applicator mechanism in linear movement. The applicator mechanism may be operated electrically, mechanically, hydraulically or in accordance to any other technique as may be appreciated by the skilled artisan. According to an optional embodiment, the applicator mechanism is designed to carry more than one applicator in order to apply the latte art to more than one substrate simultaneously.

The tray (8) is intended for bearing a cup (9) or any other type of container which contains a beverage, e.g coffee, which is topped with foamed milk. According to one particular embodiment of the apparatus, said tray (8) is not moved on the plane of the tray during the process of applying the design but can be moved to adjust the height of the tray, such that the sole motion of the applicator creates the design. Accordingly, the foamed milk which is on top of a liquid is not agitated while the design is being applied. Motion of the tray in the plane of the tray during application may cause agitating of the foamed milk during design application which may damage the design. Optionally, the tray (8) can be moved by a tray mechanism after or before design application, while also enabling the adjustment of the height of the tray during application.

The data controlling device (6) of the apparatus receives, processes and provides data required for controlling the various parameters needed for creating the design. Said parameters include amount of coffee solution, position and motion of the applicator (2) and/or tray (8) and parameters for generating images in accordance to the design. The preferred data controlling device is a computer (6) which can receive images or self-generate images and provide data to the controller (7).

The controller (7) receives commands from the data control device (6) and controls the positioning of the applicator (2) in relation to the surface of the foamed milk by sending commands to the applicator and or tray. Furthermore, commands are sent from the controller (7) to a dose regulating device which controls the amount of coffee solution dispensed. Said dose regulating device may be included to be within the applicator or as part of the reservoir.

According to yet a further embodiment present, the apparatus may be assembled in such a manner that any number of the devices a) to f) may be incorporated in a single device or, a combination of devices a) to f) may be incorporated to more than one device, e.g. devices a) to c) and f) can be a bubble jet printer; or a) to c) can be an ink jet printer head.

According to a particular embodiment, the data control device may be connected to external data generating devices or sources. For example the data control device can be connected to the internet or to mobile phone systems in order to receive SMS messages to be generated onto the foamed coffee.

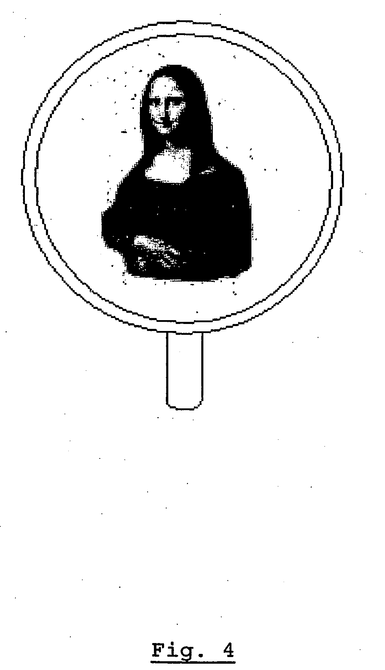

In yet a further embodiment of the present invention the designs created on the foam of the milk may be designs which contain various intensities of the brown color of the coffee in order to enable to create extremely intricate designs (Fig. 4) with a broad spectrum of intensity. Controlling the intensity may be done in accordance to the methods employed in ink jet printers or in accordance to other color-intensity-control methods known to the skilled artisan.

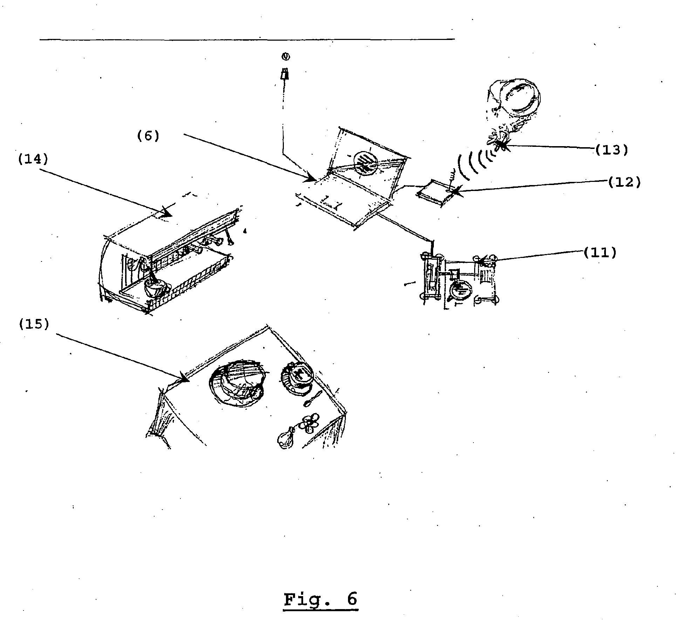

According to yet a further embodiment of the present invention with reference to Fig. 6, the method of the present invention is employed in a coffee preparation process, which can be carried out in a commercial environment such as a coffee shop, wherein a design is transmitted from a mobile phone (13) to the data controlling computer (6). The transmission is received via a receiver (12) and professed in the computer (6) . A coffee beverage having a foamed milk topping is prepared with a commercial coffee machine (14) and the cup of coffee beverage is then positioned in the design generating apparatus (11) where the design is applied to the surface of the foamed milk, followed by serving the coffee beverage with the design to the table of the consumer (15).

While embodiments of the invention have been described by way of illustration, it will be apparent that the invention may be carried out with many modifications, variations and adaptations within the scope of the claims.

## Claims

1. A method for creating designs on the surface of foamed milk with a coffee solution comprising of dispensing a coffee solution by means of an applicator (2) to the surface of the foamed milk in a pattern according to the intended design, wherein the dispensing is controlled by automated means;
**characterised in that**
said applicator is moved by an applicator mechanism such that the sole motion of the applicator creates the intended design. ,

2. A method according to claim 1 wherein the applicator is selected from among inkjet and bubble jet printing heads, a pointed needle-like utensil, wherein said utensil may be hollow, air brush applicators or the like, or any type of applicator which can spray, atomize, drip or apply the coffee solution onto the foamed milk.

3. A method according to claim 2 wherein the applicator works according to spraying or atomizing techniques.

4. A method according to claim 1 wherein the automated means is a combination of mechanical and data controlling devices.

5. A method according to claim 4 wherein the mechanical devices in the automated means control the position of the applicator in relation to the surface of the foamed milk.

6. A method according to claim 4 wherein data controlling devices within the automated means are intended for the input, processing and output of data required for creating the design wherein said data may include design data for generating the desired image and commands for controlling and moving the mechanical devices.

## Patentansprüche

1. Verfahren zum Erzeugen von Designs auf der Oberfläche aufgeschäumter Milch mittels einer Kaffeelösung, umfassend das Verteilen einer Kaffeelösung mittels eines Applikators (2) auf der Oberfläche der aufgeschäumten Milch in einem Muster, das einem gewünschten Design entspricht, wobei das Verteilen durch eine automatisierte Einrichtung gesteuert wird;
**dadurch gekennzeichnet, dass**
der Applikator durch einen Applikatormechanismus so bewegt wird, dass das gewünschte Design durch die alleinige Bewegung des Applikators erzeugt wird.

2. Verfahren nach Anspruch 1, wobei der Applikator ausgewählt ist aus Tintenstrahl- und Bubble-Jet-Druckköpfen, einem spitzen, nadelähnlichen Utensil, wobei das Utensil hohl sein kann, Airbrush-Applikatoren oder dergleichen, oder einem beliebigen Typ eines Applikators, der die Kaffeelösung auf die aufgeschäumte Milch sprühen, zerstäuben, tropfen oder aufbringen kann.

3. Verfahren nach Anspruch 2, wobei der Applikator gemäß Sprüh-oder Zerstäubungstechniken arbeitet.

4. Verfahren nach Anspruch 1, wobei die automatisierte Einrichtung eine Kombination aus mechanischen sowie Datensteuerungsvorrichtungen ist.

5. Verfahren nach Anspruch 4, wobei die mechanischen Vorrichtungen in der automatisierten Einrichtung die Position des Applikators in Bezug auf die Oberfläche der aufgeschäumten Milch steuern.

6. Verfahren nach Anspruch 4, wobei Datensteuerungsvorrichtungen innerhalb der automatisierten Einrichtung zur Eingabe, Verarbeitung und Ausgabe von Daten ausgelegt sind, die zur Erzeugung des Designs erforderlich sind, wobei die Daten Designdaten zum Erzeugen des gewünschten Bildes sowie Befehle zur Steuerung und Bewegung der mechanischen Vorrichtungen aufweisen können.

## Revendications

1. Procédé pour créer des dessins sur la surface de lait mousseux en utilisant une solution à base de café comportant de distribuer une solution à base de café par l'intermédiaire d'un applicateur (2) à la surface du lait mousseux selon un motif conformément au dessin prévu, dans lequel la distribution est commandée par des moyens automatisés,
**caractérisé en ce que**
ledit applicateur est déplacé par un mécanisme d'applicateur de sorte que le seul mouvement de l'applicateur crée le dessin prévu.

2. Procédé selon la revendication 1, dans lequel l'applicateur est sélectionné parmi des têtes d'impression à jet d'encre et à bulle d'encre, un ustensile de type aiguille pointue, dans lequel ledit ustensile peut être creux, des applicateurs de type aérographe ou analogue, ou tout type d'applicateur quelconque qui peut pulvériser, atomiser, délivrer en goutte-à-goutte ou appliquer la solution à base de café sur le lait mousseux.

3. Procédé selon la revendication 2, dans lequel l'applicateur travaille conformément à des techniques de pulvérisation ou d'atomisation.

4. Procédé selon la revendication 1, dans lequel les moyens automatisés sont une combinaison de dispositifs mécaniques et de commande de données.

5. Procédé selon la revendication 4, dans lequel les dispositifs mécaniques dans les moyens automatisés commandent la position de l'applicateur en relation avec la surface du lait mousseux.

6. Procédé selon la revendication 4, dans lequel des dispositifs de commande de données dans les moyens automatisés sont prévus pour l'entrée, le traitement et la sortie de données requises pour créer le dessin, dans lequel lesdites données peuvent inclure des données de motif pour générer l'image voulue et des instructions pour commander et déplacer les dispositifs mécaniques.
